# EUROPÄISCHE PATENTSCHRIFT

(11) **EP 1 360 753 B1**
(45) Veröffentlichungstag und Bekanntmachung des Hinweises auf die Patenterteilung: **03.04.2013**
(21) Anmeldenummer: 02718020.7
(22) Anmeldetag: 12.01.2002
(51) Int. Cl.: H02K 7/10

(54) **VERZAHNUNGSTEIL EINES GETRIEBEMOTORS, BAUREIHE VON GETRIEBEMOTOREN UND VERBINDUNG**
TOOTHED PIECE FOR A GEARED MOTOR, SERIES OF GEARED MOTORS AND CONNECTION
ELEMENT DENTE DE MOTO-REDUCTEUR, SERIE DE MOTO-REDUCTEURS ET CONNEXION

(30) Priorität: 08.02.2001 DE 10105745; 13.03.2001 DE 10111900
(43) Veröffentlichungstag der Anmeldung: 12.11.2003
(73) Patentinhaber: SEW-EURODRIVE GmbH & Co. KG, 76646 Bruchsal (DE)
(72) Erfinder: CHRIST, Michael, 76689 Karlsdorf/Neuthard (DE)
(86) Internationale Anmeldenummer: PCT/EP2002/000244
(87) Internationale Veröffentlichungsnummer: WO 2002/063747

(56) Entgegenhaltungen:
- DE-A- 3 018 986
- DE-U- 29 603 748
- GB-A- 888 509
- US-A- 2 067 477
- US-A- 3 242 998
- US-A- 3 757 608
- US-A- 5 865 239

## Beschreibung

Die Erfindung betrifft einen Getriebemotor mit einem Verzahnungsteil, eine Baureihe von Getriebemotoren und eine Verbindung.

*Aus der* US 3 242 998 A *ist ein von einer verzahnten Motorwelle angetriebenes Verzahnungsteil für eine Verbindung mit einer Abtriebswelle bekannt, das eine erste Verzahnung in einem ersten Bereich und eine zweite Verzahnung in einem zweiten Bereich aufweist. Dabei muss in aufwendiger und kostspieliger weise eine Innenverzahnung gefertigt werden.*

Aus der EP 0 989 316 A1 ist als Verzahnungsteil auch ein Einsteckritzel bekannt. Beim Montieren ist jedoch ein Zentrieren nur aufwendig vorsehbar.

*Aus der* DE 26 07 363 C3 *weist das Verzahnungsteil zwei Schrägverzahnungen auf, wobei aber wiederum beim Montieren ein Zentrieren nur aufwendig vorsehbar ist.*

*Aus der* DE 296 03 748 U1 *ist bei einem Adapter ein Zapfen bekannt, der beim Einführen zum Zentrieren verwendbar ist.*

Aus der GB A 888509 ist eine zwei Laufverzahnungen aufweisende Welle bekannt, deren Schrägungswinkel unterschiedliches Vorzeichen aufweisen und deren Kopfkreisradius gleich ist.

Es sind Getriebemotoren bekannt, deren Motorwelle ein außenverzahntes Ritzel antreibt, dessen Verzahnung mit einem eine Laufverzahnung aufweisenden, außenverzahnten Zahnrad in Eingriff ist.

Zur Geräuschverminderung werden bei diesen Verzahnungen Evolventenverzahnungen mit einem nicht verschwindenden Schrägungswinkel eingesetzt. Nachteilig ist dabei, dass bei Übertragung von Drehmoment Axialkräfte entstehen, die von weiteren Komponenten, wie beispielsweise Lagern, aufgenommen werden müssen.

Der Erfindung liegt daher die Aufgabe zugrunde, bei einem Getriebemotor ein Ritzel derart weiterzubilden, dass kostengünstigere Teile im Getriebe verwendbar sind oder in kostengünstigerer Weise Teile im Getriebe sogar weggelassen werden können.

Erfindungsgemäß wird die Aufgabe bei dem Getriebemotor mit einem Verzahnungsteil nach den in Anspruch 1 angegebenen Merkmalen, bei der Baureihe von Getriebemotoren nach den in Anspruch 11 angegebenen Merkmalen und bei der Verbindung nach den in Anspruch 12 angegebenen Merkmalen gelöst.

Wichtige Merkmale der Erfindung bei dem Verzahnungsteil sind, dass das Verzahnungsteil
für eine Verbindung mit einer Motorwelle des Elektromotors mindestens eine erste Verzahnung in einem ersten axialen Bereich aufweist, und mindestens eine zweite Verzahnung in einem zweiten axialen Bereich aufweist, wobei die zweite Verzahnung mit einer Laufverzahnung eines weiteren verzahnten Teils des Getriebes im Eingriff ist. Von Vorteil ist dabei, dass die zweite Verzahnung mit einem anderen Teilkreisdurchmesser ausführbar ist als die erste Verzahnung. Somit sind motorseitig innerhalb einer Baugröße bei verschiedenen Varianten verschiedene Verzahnungsteile einsetzbar, die motorseitig mit immer der gleichen ersten Verzahnung ausführbar sind und getriebeseitig mit verschiedenen zweiten Verzahnungen ausführbar sind. Auf diese Weise lässt sich innerhalb der Baugröße bei jeder Variante eine gleichartige Motorwelle verwenden, wobei verschiedene Übersetzungszahlen bei der ersten eintreibenden Stufe des Getriebes realisierbar sind. Ein weiterer wesentlicher Vorteil ist, dass mittels der ersten Verzahnung ein hohes Drehmoment von der Motorwelle an das Verzahnungsteil übertragbar ist.

Erfindungsgemäβ weist die Motorwelle eine Mitnehmerverzahnung auf, die mit der ersten Verzahnung des Verzahnungsteils im Eingriff steht. Von Vorteil ist dabei, dass nicht nur ein hohes Drehmoment übertragbar ist sondern auch die Verzahnungen mit industrieüblichen Verzahnungsmaschinen kostengünstig fertigbar sind.

Erfindungsgemäβ ist die Mitnehmerverzahnung der Motorwelle eine Innenverzahnung. Von Vorteil ist dabei, dass sie mit industrieüblichen Fertigungsverfahren kostengünstig herstellbar ist, insbesondere durch Stoßen, Räumen Urformen und/oder Fräsen.

Erfindungsgemäβ sind erste und zweite Verzahnung jeweils schrägverzahnt und weisen das gleiche Vorzeichen beim Schrägungswinkel und/oder den gleichen Schrägungswinkel auf. Von Vorteil ist dabei, dass die von den Schrägverzahnungen erzeugten Axialkraftkomponenten auf das Verzahnungsteil selbst bei der Konstruktion durch Wahl der Schrägungswinkel und Verzahnungsdaten derart beeinflussbar sind, dass eine verminderte resultierende Axialkraftkomponente auf das Verzahnungsteil selbst erreichbar ist. Durch diese Verminderung der resultierenden Axialkraft auf das Verzahnungsteil selbst sind wesentliche Verbesserungen bei der Konstruktion des Getriebes erreichbar. Andere Teile sind kostengünstiger ausführbar oder sogar verzichtbar, wie beispielsweise entsprechende Sicherungsringe oder dergleichen.

Erfindungsgemäβ ist der Teilkreisdurchmesser der ersten Verzahnung größer als der Teilkreisdurchmesser der zweiten Verzahnung. Von Vorteil ist dabei, dass auch ein kleineres Zahnrad in der ersten Getriebestufe, umfassend zweite Verzahnung des Einsteckritzels und Zahnrad, verwendbar ist, wodurch auch kleine Übersetzungszahlen realisierbar sind.

Bei einer vorteilhaften Ausgestaltung sind erste und zweite Verzahnung Evolventenverzahnungen. Von Vorteil ist dabei, dass solche industrieüblichen Verzahnungen auf den entsprechenden Fertigungsmaschinen kostengünstig, einfach und schnell herstellbar sind.

Bei einer vorteilhaften Ausgestaltung sind erste und/oder zweite Verzahnung Außenverzahnungen. Von Vorteil ist dabei, dass das Verzahnungsteil eine kompakte Form hat und somit kostengünstig herstellbar ist. Insbesondere Außenverzahnungen sind mit großen Fräsern und nach dem Härten mit großen Schleifscheiben einfach, schnell und kostengünstig herstellbar.

Bei einer vorteilhaften Ausgestaltung weist das Verzahnungsteil an seinem motorseitigen Ende einen Zapfen auf, der in eine entsprechende Auslassung der Motorwelle derart eingeführt ist, dass er beim Einführen in die Auslassung zur Zentrierung des Verzahnungsteiles verwendbar ist. Von Vorteil ist dabei, dass die Fertigung einfach und schnell ausführbar ist. Insbesondere ermöglicht das Zentrieren auch eine hoch präzise und gleichzeitig schnell ausführbare Montage.

Bei einer vorteilhaften Ausgestaltung ist der Zapfen zylindrisch geformt. Von Vorteil ist dabei, dass der Zapfen kostengünstig herstellbar ist.

Bei einer vorteilhaften Ausgestaltung ist der Zapfen konisch geformt. Von Vorteil ist dabei, dass die Montage besonders schnell ausführbar ist und auch bei einer Abweichung des Verzahnungsteils von der Idealposition vor oder bei der Montage ein Zentrieren sozusagen automatisch korrekt beim Einstecken in die Motorwelle erfolgt.

Bei einer vorteilhaften Ausgestaltung weist der Zapfen eine Rändelung auf. Von Vorteil ist dabei, dass die Rändelung eine größere Härte aufweist als das Material der Motorwelle und somit in die Motorwelle unter Materialverformung einpressbar ist. Somit ist die Verbindung des Verzahnungsteils mit der Motorwelle bei kleinen Drehmomenten über diese Pressverbindung ausgeführt. Erst nach Überschreiten eines kritischen Drehmoments ist die Mitnehmerverzahnung der Motorwelle mit der ersten Verzahnung des Verzahnungsteils für die Drehmomentübertragung verwendbar.

Bei einer vorteilhaften Ausgestaltung weist das Verzahnungsteil eine Auslassung auf, die beim Einführen in die Motorwelle zur Zentrierung des Verzahnungsteiles verwendbar ist. Von Vorteil ist dabei, dass das Verzahnungsteil nur eine kurze Länge hat und somit weniger Lagerraum und Montageraum benötigt, insbesondere auf kleinerem Raumvolumen bei der Montage drehbar ist. Auch weist es ein geringeres Volumen an Material auf. Da das Material des Verzahnungsteils insbesondere wegen des höheren zu übertragenden Drehmoments und der höheren Härte zur Schleifbearbeitung der Verzahnungen kostspieliger ist als das Material der Motorwelle, für das auch Baustahl verwendbar ist.

Bei einer vorteilhaften Ausgestaltung werden erste und zweite Verzahnung von einer einzigen Verzahnung umfasst. Von Vorteil ist dabei, dass die Fertigung besonders einfach ist und eine hohe Übersetzungszahl realisierbar ist.

Wesentliche Merkmale der Erfindung bei der Baureihe von Getriebemotoren sind, dass die Baureihe mindestens eine Baugröße umfasst, und wobei von jeder Baugröße eine oder mehrere Varianten von Getriebemotoren umfasst werden, und wobei innerhalb einer Baugröße bei verschiedenen Varianten gleichartige Motorwellen verwendbar sind, die mit jeweils einem Verzahnungsteil verbindbar und/oder verbunden sind, wobei innerhalb einer Baugröße mindestens eine Variante ein Verzahnungsteil umfasst, dessen erste und zweite Verzahnung unterschiedlich sind, und wobei mindestens eine weitere Variante ein Verzahnungsteil umfasst, dessen erste und zweite Verzahnung gleich sind. Von Vorteil ist dabei, dass durch die Verwendung der verschiedenen Verzahnungsteile ein weiter Bereich von verschiedenen Übersetzungszahlen realisierbar ist. Insbesondere lassen sich innerhalb einer Baugröße bei den Varianten nicht nur die Verzahnungsdaten bei im Wesentlichen konstantem Teilkreisdurchmesser variieren sondern auch die Teilkreisdurchmesser. Dies erweitert den Bereich der Übersetzungszahlen erheblich.

Außerdem lässt sich als erste Verzahnung eine Evolventenverzahnung verwenden und als zweite Verzahnung eine Ritzel für ein Kegelradgetriebestufe oder ein Ritzel für eine andere Art Getriebestufe, wie beispielsweise eine Planetengetriebestufe, eine Getriebestufe mit einem spiroidal verzahnten Rad oder andere Winkelgetriebestufen. Somit ist sogar eine immer gleichartige Motorwelle bei verschiedenen Arten der eintreibenden Getriebestufe verwendbar.

Wesentliche Merkmale der Erfindung bei der Verbindung von einem ersten drehenden Teil über ein Verzahnungsteil auf ein eine Laufverzahnung aufweisendes Teil sind, dass das Verzahnungsteil eine zweite Verzahnung aufweist, die mit der Laufverzahnung im Eingriff ist, und dass das Verzahnungsteil eine erste Verzahnung aufweist, die mit einer Mitnehmerverzahnung des ersten drehenden Teiles im Eingriff steht, und dass die Schrägungswinkel der ersten und der zweiten Verzahnung derart gewählt werden, dass die Richtung der von der Mitnehmerverzahnung und ersten Verzahnung erzeugten Axialkraft auf das Verzahnungsteil selbst und die Richtung der von der Laufverzahnung und zweiten Verzahnung erzeugten Axialkraft auf das Verzahnungsteil selbst entgegengesetzt gerichtet sind zur Verminderung der resultierenden Axialkraft auf das Verzahnungsteil selbst. Von Vorteil ist dabei, dass die von den Schrägverzahnungen erzeugten Axialkraftkomponenten auf das Verzahnungsteil selbst bei der Konstruktion durch Wahl der Schrägungswinkel und Verzahnungsdaten derart beeinflussbar sind, dass eine verminderte resultierende Axialkraftkomponente auf das Verzahnungsteil selbst erreichbar ist. Durch diese Verminderung der resultierenden Axialkraft auf das Verzahnungsteil selbst sind wesentliche Verbesserungen bei der Konstruktion der gesamten Vorrichtung erreichbar. Andere Teile sind kostengünstiger ausführbar oder sogar verzichtbar, wie beispielsweise entsprechende Sicherungsringe oder dergleichen.

Weiterevorteilhafte Ausgestaltungen ergeben sich aus den Unteransprüchen.

### Bezugszeichenliste

- 1,21,63: erste Verzahnung
- 2,22,64: zweite Verzahnung
- 3,23, 42, 51, 61, 71: Einsteckritzel
- 31: Motor
- 32,41: Motorwelle
- 33: Auslassung
- 34: Mitnehmerverzahnung
- 43: zylindrischer Zapfen
- 44: Zahnrad
- 52: konischer Zapfen
- 62: Auslassung
- 72: Zapfen mit Rändelung
- 81: Einsteckritzel
- 82: Verzahnung

Die Erfindung wird nun anhand von einer Abbildung näher erläutert:

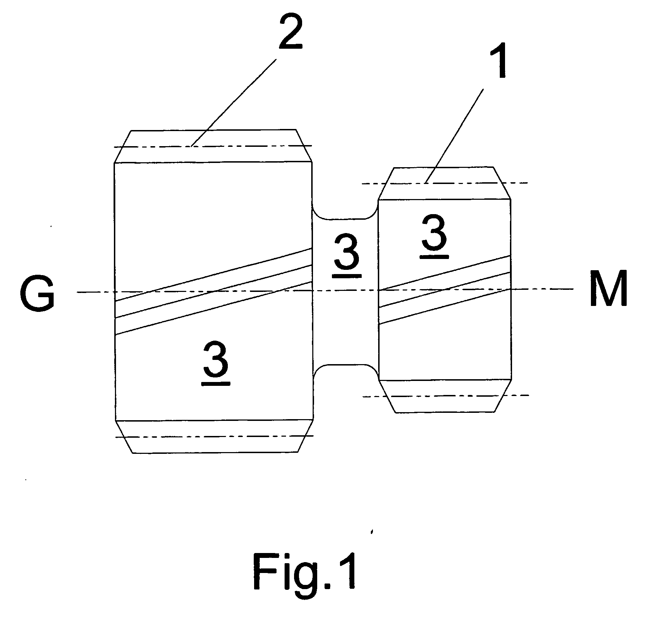

In der Figur 1 ist ein Einsteckritzel 1 gezeigt, das eine erste Verzahnung 1 und eine zweite Verzahnung 2 aufweist, wobei die erste Verzahnung 1 einen kleineren Teilkreisdurchmesser als die zweite Verzahnung 2 aufweist. Erste Verzahnung 1 und zweite Verzahnung 2 weisen jeweils einen negativen Schrägungswinkel auf, der den gleichen Betrag hat. In anderen erfindungsgemäßen Ausführungsbeispielen sind auch verschiedene Beträge verwendbar.

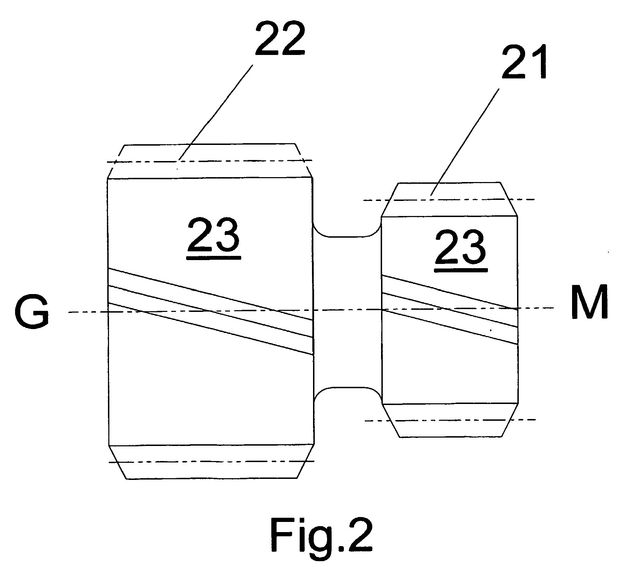

In der Figur 2 ist ein Einsteckritzel 23 gezeigt, das eine erste Verzahnung 21 und eine zweite Verzahnung 22 aufweist, wobei die erste Verzahnung 21 wiederum einen kleineren Teilkreisdurchmesser als die zweite Verzahnung 22 aufweist. Erste Verzahnung 21 und zweite Verzahnung 22 weisen jeweils einen positiven Schrägungswinkel auf, der den gleichen Betrag hat.

Der Schrägungswinkel ist in den Figuren 1 und 2 symbolisch durch 3 parallele Striche gekennzeichnet. Mit M wird in den Figuren das motorseitige, mit G das getriebeseitige axiale Ende des Einsteckritzels bezeichnet.

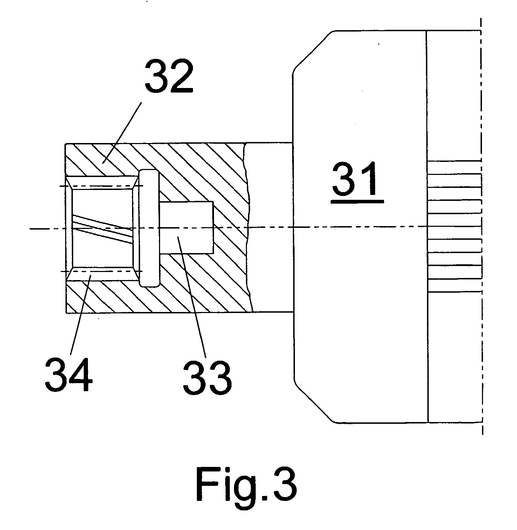

In der Figur 3 ist ein Motor 31 teilweise angedeutet, dessen Motorwelle 32 eine Bohrung mit einer als Innenverzahnung ausgeführten Mitnehmerverzahnung 34 aufweist, mit der die erste Verzahnung 1,21 des Einsteckritzels 3,23 im Eingriff steht.

Zusätzlich weist die Motorwelle eine Auslassung 33 zur Zentrierung eines mit einem entsprechenden Zapfen versehenen Einsteckritzels auf. In anderen erfindungsgemäßen Ausführungsbeispielen ist die Motorwelle 32 ohne Auslassung ausführbar, wobei dann Einsteckritzel 3,23 gemäß Figuren 1 oder 2 verwendet werden.

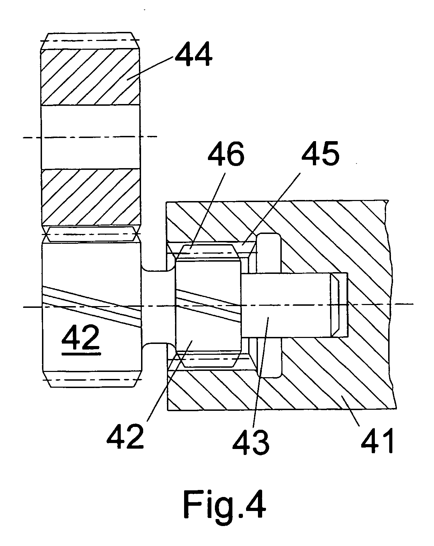

In der Figur 4 ist ein Einsteckritzel 42, das einen zylindrischen Zapfen 43 zur Zentrierung beim Einstecken in die Motorwelle 41 aufweist. Mit der zweiten Verzahnung 2 als Laufverzahnung ist das Einsteckritzel 42 mit dem Zahnrad 44 des Getriebes im Eingriff.

Die als Schrägverzahnung ausgeführte Mitnehmerverzahnung 45 erzeugt im Eingriff mit der ebenfalls als Schrägverzahnung ausgeführten ersten Verzahnung 46 eine Axialkraftkomponente auf das Verzahnungsteil selbst. Die Laufverzahnung des Zahnrades 44 erzeugt zusammen mit der zweiten Verzahnung des Einsteckritzels 42 eine entgegengesetzt gerichtete Axialkraftkomponente auf das Verzahnungsteil selbst. Somit weist die resultierende Axialkraftkomponente auf das Verzahnungsteil selbst je nach Wahl der Schrägungswinkel und der Verzahnungsdaten einen nur geringen oder sogar verschwindenden Wert auf.

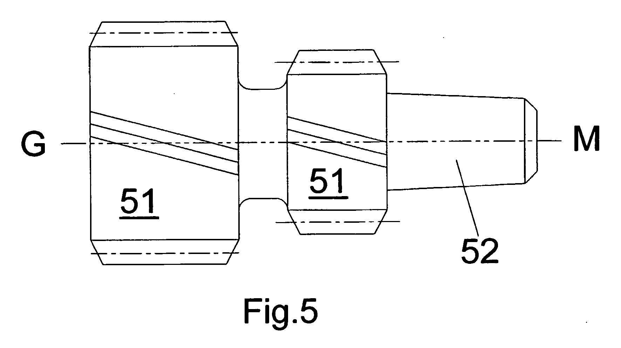

In der Figur 5 ist ein Einsteckritzel 51 gezeigt, das zur Zentrierung in einer entsprechend konisch ausgeführten Auslassung und/oder Bohrung in der Motorwelle einen konischen Zapfen 52 aufweist.

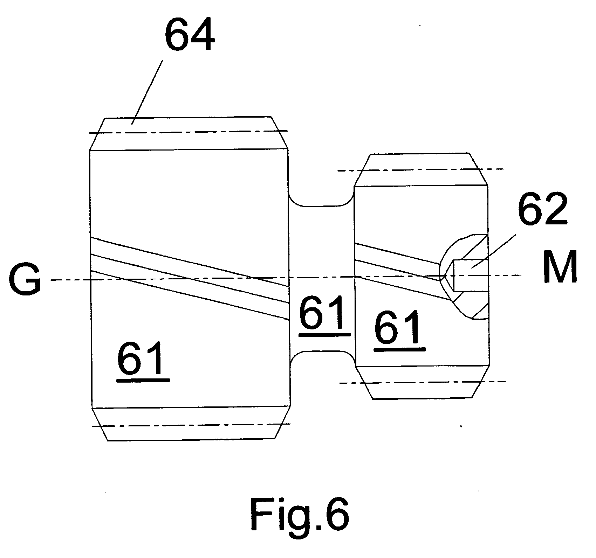

In der Figur 6 ist ein Einsteckritzel 61 gezeigt, das wiederum eine erste Verzahnung 63 und eine zweite Verzahnung 64 aufweist. Außerdem weist das Einsteckritzel 61 eine Auslassung 62 zum Zentrieren auf, wobei die Motorwelle eine entsprechende Form aufweist oder bei anderen erfindungsgemäßen Ausführungsbeispielen die Motorwelle mit entsprechenden Teilen versehen wird.

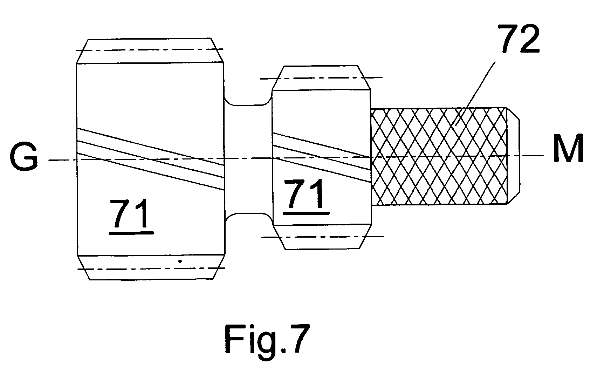

In der Figur 7 ist ein Einsteckritzel 71 gezeigt, das einen mit einer Rändelung 72 versehenen Zapfen aufweist. Da das Einsteckritzel 71 ein gehärtetes und/oder ein Material mit größerer Härte aufweist, ist das Einsteckritzel 71 in die weichere Motorwelle, die aus Baustahl gefertigt ist, unter Materialverformung einpressbar.

Statt Baustahl sind auch anderer Materialien verwendbar, die eine geringere Härte aufweisen als das Einsteckritzel.

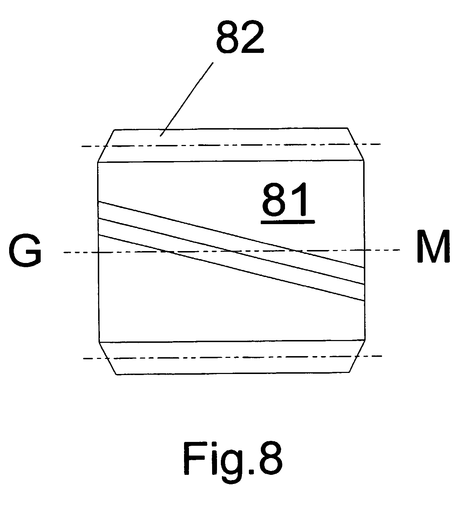

In der Figur 8 ist eine erfindungsgemäße vorteilhafte Weiterbildung gezeigt, wobei das Einsteckritzel 81 eine schrägverzahnte Verzahnung 82 aufweist, die motorseitig mit der entsprechend schrägverzahnten Mitnehmerverzahnung der Auslassung der Motorwelle im Eingriff steht und getriebeseitig mit der Laufverzahnung eines entsprechend schrägverzahnten Zahnrades des Getriebes im Eingriff ist. Somit ist nur eine einzige Verzahnung zu fertigen, was besonders einfach und kostengünstig ist.

In einer Getriebebaureihe mit mehreren Übersetzungen innerhalb einer Baugröße sind also Einsteckritzel gemäß Figur 8 verwendbar, bei denen Verzahnungsdaten, wie insbesondere Fuß-, Kopf- und Teilkreisdurchmesser der ersten und der zweiten Verzahnung gleich sind. Außerdem sind mit der gleichen Motorwelle Einsteckritzel gemäß Figur 1 verwendbar. Da somit verschiedene Einsteckritzel mit jeweils verschiedener zweiten Verzahnung aber gleicher ersten Verzahnung verwendbar sind, ist ein weiter Bereich von Übersetzungszahlen realisierbar.

In weiteren erfindungsgemäßen Ausführungsformen lässt sich die Erfindung auch bei anderen Verzahnungsarten anwenden. Beispielsweise ist die erste Verzahnung des Einsteckritzels eine schrägverzahnte Evolventenverzahnung und die zweite Verzahnung ist im Eingriff mit einem Kegelrad oder einem spiroidal verzahnten Rad. Es sind also auch zylindrische oder nicht-zylindrische zweite Verzahnungen ausführbar.

In weiteren erfindungsgemäßen Ausführungsformen lässt sich die Erfindung nicht nur bei Getrieben verwenden sondern auch bei weiteren Vorrichtungen, die eine Verbindung von einem ersten drehenden Teil, wie beispielsweise einer Welle, über ein Verzahnungsteil an ein eine Laufverzahnung aufweisendes Teil umfasst. Dabei ist in der in den Figuren gezeigten Art und Weise das Verzahnungsteil mit einer ersten und zweiten Verzahnung auszuführen, die jeweils das gleiche Vorzeichen des Schrägungswinkel derart aufweisen, dass die jeweils erzeugten Axialkraftkomponenten entgegengerichtet sind. Somit lassen sich die genannten Vorteile und Wirkungen auch bei weiteren Vorrichtungen erreichen.

## Patentansprüche

1. Getriebemotor mit einem Verzahnungsteil,
wobei das Verzahnungsteil ein Einsteckritzel (3, 23, 42, 51, 61, 71) ist,
der zumindest Elektromotor (31) und Getriebe umfasst,
wobei das Verzahnungsteil
für eine Verbindung mit einer Motorwelle (32, 41) des Elektromotors mindestens eine erste Verzahnung (1, 21, 63) in einem ersten axialen Bereich aufweist, und
mindestens eine zweite Verzahnung (2, 22, 64) in einem zweiten axialen Bereich aufweist,
wobei die zweite Verzahnung (2, 22, 64) mit einer Laufverzahnung eines weiteren verzahnten Teils des Getriebes im Eingriff ist,
wobei die Motorwelle (32, 41) eine Mitnehmerverzahnung (34) aufweist, die mit der ersten Verzahnung (1, 21, 63) des Verzahnungsteils im Eingriff steht,
wobei die Mitnehmerverzahnung (34) der Motorwelle (32, 41) eine Innenverzahnung ist,
wobei erste und zweite Verzahnung (1, 21, 63, 2, 22, 64) jeweils schrägverzahnt sind und das gleiche Vorzeichen beim Schrägungswinkel und/oder den gleichen Schrägungswinkel aufweisen,
wobei der Teilkreisdurchmesser der ersten Verzahnung (1, 21, 63) größer ist als der Teilkreisdurchmesser der zweiten Verzahnung (2, 22, 64).

2. Getriebemotor mit einem Verzahnungsteil nach mindesten einem der vorangegangenen Ansprüche,
**dadurch gekennzeichnet, dass**
der erste axiale Bereich motorseitig, insbesondere am motorseitigen Ende des Verzahnungsteils, und der zweite axiale Bereich getriebeseitig, insbesondere am getriebeseitigen Ende des Verzahnungsteils, angeordnet ist.

3. Getriebemotor mit einem Verzahnungsteil nach mindesten einem der vorangegangenen Ansprüche,
**dadurch gekennzeichnet, dass**
erste und zweite Verzahnung (1, 21, 63, 2, 22, 64) Evolventenverzahnungen sind.

4. Getriebemotor mit einem Verzahnungsteil nach mindesten einem der vorangegangenen Ansprüche,
**dadurch gekennzeichnet, dass**
erste und/oder zweite Verzahnung (1, 21, 63, 2, 22, 64) Außenverzahnungen sind.

5. Getriebemotor mit einem Verzahunngsteil nach mindesten einem der vorangegangenen Ansprüche,
**dadurch gekennzeichnet, dass**
das Verzahnungsteil an seinem motorseitigen Ende einen Zapfen aufweist, der in eine entsprechende Auslassung (33) der Motorwelle (32, 41) derart eingeführt ist, dass er beim Einführen in die Auslassung (33) zur Zentrierung des Verzahnungsteiles verwendbar ist.

6. Getriebemotor mit einem Verzahnungsteril nach mindesten einem der vorangegangenen Ansprüche,
**dadurch gekennzeichnet, dass**
der Zapfen (43) zylindrisch geformt ist.

7. Getriebemotor mit einem Verzahnungsteil nach mindesten einem der vorangegangenen Ansprüche,
**dadurch gekennzeichnet, dass**
der Zapfen (52) konisch geformt ist.

8. Getriebemotor mit einem Verzahnungsteil nach mindesten einem der vorangegangenen Ansprüche,
**dadurch gekennzeichnet, dass**
der Zapfen (72) eine Rändelung aufweist.

9. Getriebemotor mit einem Verzahnungsteil nach mindesten einem der vorangegangenen Ansprüche,
**dadurch gekennzeichnet, dass**
das Verzahnungsteil eine Auslassung (62) aufweist, die beim Einführen in die Motorwelle (32, 41) zur Zentrierung des Verzahnungsteiles verwendbar ist.

10. Getriebemotor mit einem Verzahnungsteril nach mindesten einem der vorangegangenen Ansprüche,
**dadurch gekennzeichnet, dass**
erste und zweite Verzahnung (1, 21, 63, 2, 22, 64) von einer einzigen Verzahnung umfasst werden.

11. Baureihe von Getriebemotoren,
wobei die Baureihe mindestens eine Baugröße umfasst,
und wobei von jeder Baugröße eine oder mehrere Varianten von Getriebemotoren umfasst werden,
und wobei innerhalb einer Baugröße bei verschiedenen Varianten gleichartige Motorwellen (32, 41) verwendbar sind, die mit jeweils einem Verzahnungsteil nach mindestens einem der vorangegangenen Ansprüche verbindbar und/oder verbunden sind,
wobei innerhalb einer Baugröße mindestens eine Variante ein Verzahnungsteil umfasst, dessen erste und zweite Verzahnung (1, 21, 63, 2, 22, 64) unterschiedlich sind,
und wobei mindestens eine weitere Variante ein Verzahnungsteil umfasst, dessen erste und zweite Verzahnung (1, 21, 63, 2, 22, 64) gleich sind.

12. Verbindung
von einem ersten drehenden Teil über ein Verzahnungsteil nach mindestens einem der vorangegangenen Ansprüche auf ein eine Laufverzahnung aufweisendes Teil
wobei
das Verzahnungsteil eine zweite Verzahnung (2, 22, 64) aufweist, die mit der Laufverzahnung im Eingriff ist,
und dass das Verzahnungsteil eine erste Verzahnung (1, 21, 63) aufweist, die mit einer Mitnehmerverzahnung (34) des ersten drehenden Teiles im Eingriff steht,
und dass die Schrägungswinkel der ersten und der zweiten Verzahnung (1, 21, 63, 2, 22, 64) derart gewählt werden, dass die Richtung der von der Mitnehmerverzahnung (34) und ersten Verzahnung (1, 21, 63) erzeugten Axialkraft und die Richtung der von der Laufverzahnung und zweiten Verzahnung erzeugten Axialkraft entgegengesetzt gerichtet sind zur Verminderung der resultierenden Axialkraft

## Claims

1. A geared motor with a toothed part,
the toothed part being a shank pinion (3, 23, 42, 51, 61, 71),
which comprises at least an electric motor (31) and a gear unit,
the toothed part
for a connection to a motor shaft (32, 41) of the electric motor having at least a first toothing (1, 21, 63) in a first axial region, and
having at least a second toothing (2, 22, 64) in a second axial region,
the second toothing (2, 22, 64) being engaged with running toothing of a further toothed part of the gear unit,
the motor shaft (32, 41) having driver toothing (34) which is engaged with the first toothing (1, 21, 63) of the toothed part,
the driver toothing (34) of the motor shaft (32, 41) being internal toothing,
the first and second toothings (1, 21, 63, 2, 22, 64) being in each case helically-geared and having the same sign for the helix angle and/or have the same helix angle,
the pitch circle diameter of the first toothing (1, 21, 63) being greater than the pitch circle diameter of the second toothing (2, 22, 64).

2. A geared motor with a toothed part according to at least one of the preceding claims, **characterised in that** the first axial region is arranged on the motor side, in particular on the motor-side end of the toothed part, and the second axial region is arranged on the gear unit side, in particular on the end of the toothed part which is on the gear unit side.

3. A geared motor with a toothed part according to at least one of the preceding claims, **characterised in that** the first and second toothings (1, 21, 63, 2, 22, 64) are involute toothings.

4. A geared motor with a toothed part according to at least one of the preceding claims, **characterised in that** the first and/or second toothings (1, 21, 63, 2, 22, 64) is/are external toothings.

5. A geared motor with a toothed part according to at least one of the preceding claims, **characterised in that** the toothed part has on its motor-side end a pin which is introduced into a corresponding cutout (33) in the motor shaft (32, 41) in such a way that upon introduction into the cutout (33) it is usable for centring the toothed part.

6. A geared motor with a toothed part according to at least one of the preceding claims, **characterised in that** the pin (43) is shaped cylindrically.

7. A geared motor with a toothed part according to at least one of the preceding claims, **characterised in that** the pin (52) is shaped conically.

8. A geared motor with a toothed part according to at least one of the preceding claims, **characterised in that** the pin (72) has knurling.

9. A geared motor with a toothed part according to at least one of the preceding claims, **characterised in that** the toothed part has a cutout (62) which upon introduction into the motor shaft (32, 41) is usable for centring the toothed part.

10. A geared motor with a toothed part according to at least one of the preceding claims, **characterised in that** the first and second toothings (1, 21, 63, 2, 22, 64) are comprised by a single toothing.

11. A series of geared motors,
the series comprising at least one size,
and each size comprising one or more variants of geared motors,
and similar motor shafts (32, 41) being usable within one size for different variants, which shafts can be connected and/or are connected to in each case one toothed part according to at least one of the preceding claims,
with within one size at least one variant comprising a toothed part, the first and second toothings (1, 21, 63, 2, 22, 64) of which are different,
and at least one further variant comprising a toothed part, the first and second toothings (1, 21, 63, 2, 22, 64) of which are identical.

12. Connection
of a first rotating part via a toothed part according to at least one of the preceding claims to a part having running toothing
wherein
the toothed part has a second toothing (2, 22, 64) which is engaged with the running toothing,
and that the toothed part has a first toothing (1, 21, 63) which is engaged with a driver toothing (34) of the first rotating part,
and that the helix angles of the first and the second toothing (1, 21, 63, 2, 22, 64) are selected such that the direction of the axial force produced by the driver toothing (34) and first toothing (1, 21, 63) and the direction of the axial force produced by the running toothing and second toothing are in opposite directions in order to reduce the resulting axial force.

## Revendications

1. Motoréducteur pourvu d'un élément denté,
sachant que l'élément denté est un pignon à emmanchement (3, 23, 42, 51, 61, 71),
le motoréducteur comprenant au moins un moteur électrique (31) et une transmission, sachant que l'élément denté présente au moins une première denture (1, 21, 63) dans une première région axiale, pour l'assemblage avec un arbre de moteur (32, 41) du moteur électrique, et
au moins une deuxième denture (2, 22, 64) dans une deuxième région axiale,
sachant que la deuxième denture (2, 22, 64) est en prise avec une denture de roulement d'un autre élément denté de la transmission,
sachant que l'arbre de moteur (32, 41) présente une denture entraîneuse (34) qui est en prise avec la première denture (1, 21, 63) de l'élément denté,
sachant que la denture entraîneuse (34) de l'arbre de moteur (32, 41) est une denture intérieure,
sachant que la première et la deuxième dentures (1, 21, 63, 2, 22, 64) sont respectivement des dentures hélicoïdales et présentent des angles d'hélice de même signe et/ou le même angle d'hélice,
sachant que le diamètre primitif de référence de la première denture (1, 21, 63) est supérieur au diamètre primitif de référence de la deuxième denture (2, 22, 64).

2. Motoréducteur pourvu d'un élément denté selon la revendication précédente, **caractérisé en ce que** la première région axiale est disposée côté moteur, en particulier à l'extrémité côté moteur de l'élément denté, et la deuxième région axiale côté transmission, en particulier à l'extrémité côté transmission de l'élément denté.

3. Motoréducteur pourvu d'un élément denté selon au moins une des revendications précédentes, **caractérisé en ce que** la première et la deuxième dentures (1, 21, 63, 2, 22, 64) sont des dentures en développante.

4. Motoréducteur pourvu d'un élément denté selon au moins une des revendications précédentes, **caractérisé en ce que** la première et/ou la deuxième dentures (1, 21, 63, 2, 22, 64) sont des dentures extérieures.

5. Motoréducteur pourvu d'un élément denté selon au moins une des revendications précédentes, **caractérisé en ce que** l'élément denté présente à son extrémité côté moteur un tenon qui est introduit dans un évidement correspondant (33) de l'arbre de moteur (32, 41) de telle sorte qu'il peut être utilisé pour le centrage de l'élément denté lors de l'introduction dans l'évidement (33).

6. Motoréducteur pourvu d'un élément denté selon au moins une des revendications précédentes, **caractérisé en ce que** le tenon (43) est de forme cylindrique.

7. Motoréducteur pourvu d'un élément denté selon au moins une des revendications précédentes, **caractérisé en ce que** le tenon (52) est de forme conique.

8. Motoréducteur pourvu d'un élément denté selon au moins une des revendications précédentes, **caractérisé en ce que** le tenon (72) présente un moletage.

9. Motoréducteur pourvu d'un élément denté selon au moins une des revendications précédentes, **caractérisé en ce que** l'élément denté présente un évidement (62) qui peut être utilisé pour le centrage de l'élément denté lors de l'introduction dans l'arbre de moteur (32, 41).

10. Motoréducteur pourvu d'un élément denté selon au moins une des revendications précédentes, **caractérisé en ce qu'**une unique denture comprend la première et la deuxième dentures (1, 21, 63, 2, 22, 64).

11. Gamme de fabrication de motoréducteurs,
sachant que la gamme de fabrication comprend au moins une taille de construction,
et sachant que chaque taille de construction comprend une ou plusieurs variantes de motoréducteurs,
et sachant qu'à l'intérieur d'une taille de construction, on peut utiliser pour des variantes différentes des arbres de moteur (32, 41) de même type, qui sont et/ou peuvent être respectivement reliés à un élément denté selon au moins une des revendications précédentes,
sachant qu'à l'intérieur d'une taille de construction, au moins une variante comprend un élément denté dont la première et la deuxième dentures (1, 21, 63, 2, 22, 64) sont différentes,
et sachant qu'au moins une autre variante comprend un élément denté dont la première et la deuxième dentures (1, 21, 63, 2, 22, 64) sont identiques.

12. Liaison d'un premier élément rotatif, au moyen d'un élément denté selon au moins une des revendications précédentes, à un élément présentant une denture de roulement,
sachant
que l'élément denté présente une deuxième denture (2, 22, 64) qui est en prise avec la denture de roulement,
et que l'élément denté présente une première denture (1, 21, 63) qui est en prise avec une denture entraîneuse (34) du premier élément rotatif,
et que les angles d'hélice de la première et de la deuxième dentures (1, 21, 63, 2, 22, 64) sont choisis de telle sorte que la direction de la force axiale produite par la denture entraîneuse (34) et la première denture (1, 21, 63) et la direction de la force axiale produite par la denture de roulement et la deuxième denture sont opposées, afin de réduire la force axiale résultante.
